# EUROPÄISCHE PATENTSCHRIFT

(11) **EP 0 835 882 B1**
(45) Veröffentlichungstag und Bekanntmachung des Hinweises auf die Patenterteilung: **03.07.2002**
(21) Anmeldenummer: 97117267.1
(22) Anmeldetag: 06.10.1997
(51) Int. Cl.: C08B 11/20, B02C 23/24, B02C 23/26, B02C 13/288, B02C 13/08, C08J 3/12

(54) **Verfahren und Vorrichtung zum gleichzeitigen Mahlen und Trocknen eines feuchten Celluloseether enthaltenden Mahlgutes**
Process and device for simultaneously grinding and drying a humid cellulose ether containing material
Procédé et dispositif pour simultanément moudre et sécher un matériau contenant un éther de cellulose humide

(30) Priorität: 10.10.1996 DE 19641781
(43) Veröffentlichungstag der Anmeldung: 15.04.1998
(73) Patentinhaber: Clariant GmbH, 65929 Frankfurt am Main (DE)
(72) Erfinder: Dönges, Reinhard, Dr., 65812 Bad Soden (DE); Sponheimer, Manfred, 65191 Wiesbaden (DE); Welt, Günther, Dr., 60529 Frankfurt (DE); Ziegelmayer, Manfred, 65474 Bischofsheim (DE)

(56) Entgegenhaltungen:
- EP-A- 0 370 447
- US-A- 4 076 935

## Beschreibung

Die Erfindung betrifft ein Verfahren zum gleichzeitigen Mahlen und Trocknen eines feuchten Celluloseether enthaltenden Mahlgutes sowie eine Vorrichtung zur Durchführung des Verfahrens.

Grundsätzlich müssen nahezu alle Celluloseether gemahlen und getrocknet werden, um sie einsatzfähig zu machen. Nach der Reaktion und nach der Reinigung von bei der Reaktion entstandenen Nebenprodukten liegen die Celluloseether in bröckeliger, stückiger, faseriger, wolliger oder wattiger Struktur vor. In dieser Form sind sie für den Einsatz, beispielsweise in in organischen und/oder wäßrigen Medien löslichen Produkten, nicht geeignet. Im allgemeinen ist es erforderlich, für die unterschiedlichen Einsatzgebiete von Celluloseethern bestimmte Korngrößenverteilungen, Trocknungsgrade und Viskositätsgrade der Ether einzustellen. So werden beispielsweise Ether in fein- oder feinstteiliger Form benötigt, um schnell klumpenfreie Lösungen in Wasser herstellen zu können. Für schnell quellfähige Ether, die z.B. in der Bohröl- oder Bauindustrie benötigt werden, ist die Viskositäts- und/oder die Korngrößenverteilung der Produkte von ausschlaggebender Bedeutung für ihre Wirksamkeit.

So ist aus der EP-B 0 370 447 ein Verfahren zum gleichzeitigen Mahlen und Trocknen feuchter Celluloseether bekannt, bei dem ein Celluloseether mit einer Anfangsfeuchte von 20 bis 70 Gew.% in einen kreisförmigen Raum mittels eines Transportgases eingebracht wird, unter Kreislaufführung schlagzerkleinert wird und das Produkt gleichzeitig in Gegenlaufrichtung zur Schlagzerkleinerung reibzerkleinert wird, wobei die Umfangsgeschwindigkeit der gegenläufig arbeitenden Zerkleinerungsstufen auf einen solchen Wert einreguliert wird, daß sich eine Mahlenergie einstellt, die das Endprodukt auf eine vorgegebene Restfeuchte von 1 bis 10 Gew.% trocknet. Das Mahlgut wird bei diesem Verfahren durch den in die Zerkleinerungsräume eingeleiteten Gasstrom weiter befördert, danach vom Gasstrom getrennt und gegebenenfalls einer selektiven Siebung unterworfen. Bei diesem einstufigen Verfahren, bei dem gleichzeitig gemahlen und getrocknet wird, fällt Überkorn an, das über eine vorgegebene Korngröße bzw. Korngrößenverteilung hinausgeht und daher mit Hilfe an sich bekannter Einrichtungen zum Aufgabegut zurückgeführt wird. Vor der Rückführung in den Kreislauf muß das Überkorn erneut befeuchtet werden, um eine Verhornung bzw. einen Viskositätsabbau durch diesen Produktanteil zu verhindern.

Aus der DE-C 952 264 ist ein dreistufiges Verfahren zur Überführung feuchter, faseriger Methylcellulosen in Pulver von hoher Lösegeschwindigkeit bekannt. Hier wird das 50 bis 70 Gew.% Wasser enthaltende Produkt zuerst zu einer plastischen Masse homogenisiert und auf 10 bis 20 °C gekühlt, wobei man sich einer gekühlten Schneckenpresse bedient; anschließend wird mit einer Hammerkorbmühle gemahlen und in einem Umlufttrockner getrocknet.

Die DE-C 24 10 789 (= US-A 4,044,198) beschreibt ein Verfahren zur Herstellung von Cellulosederivaten, vorzugsweise Celluloseethern, mit hohem Feinanteil. Hier werden die feuchten Cellulosederivate mittels flüssigem Stickstoff versprödet und dann einer Mahlung unterworfen.

Die DE-B 24 58 998 (= US-A 4,076,935) und die Zusatzanmeldung hierzu, DE-B 25 58 821, betreffen Verfahren zur Feinmahlung von Cellulose oder deren Derivate, insbesondere Ether, wobei man die Mahlung des Produkts mit einem Wassergehalt von 5 bis 14 Gew.% so lange vornimmt, bis die Teilchengröße höchstens 100 µm und die Restfeuchte höchstens 2 bis 10 Gewichtsprozent beträgt. Hierzu werden Schwingmühlen eingesetzt.

In der EP-A 0 049 815 (= US-A 4,415,124) wird ein zweistufiges Verfahren zur Herstellung von Mikropulvern aus Celluloseethern oder Cellulose beschrieben, wobei man die Produkte, die eine feinfaserige oder wollige Struktur aufweisen, zuerst in eine versprödete, verfestigte Form überführt und das so vorbehandelte Material einer Mahlung unterwirft, bis eine Korngrößenverteilung von mindestens 90 % unter 125 µm erreicht wird. in der Versprödungsstufe werden Schwingoder Kugelmühlen, vorzugsweise in gekühlter Ausführung, oder Pelletpressen und in der Mahlstufe Stift- oder Pralltellermühlen eingesetzt.

DE-A 14 54 824 beschreibt ein Verfahren zur Herstellung von Granulaten oder Pulvern aus faserigen, trockenen Celluloseethern durch Friktionierung zwischen zwei Walzen unterschiedlicher Drehzahl und nachfolgender Mahlung.

DE-A 30 32 778 nennt ein zweistufiges Verfahren zur kontinuierlichen Homogenisierung von feuchten Celluloseethern, indem man den feuchten Celluloseether einer Schneid-, Prall- und Scherwirkung, erzeugt durch umlaufende Drehkörper mit verschiedenen Mantelprofilen, unterwirft, gegebenenfalls gleichzeitiger Pelletisierung der zerkleinerten Celluloseether unter Zugabe von Wasser und anschließender Trocknung der erhaltenen Pellets.

Die bekannten Verfahren nach dem Stand der Technik sind zum größten Teil mehrstufig mit Vortrocknung oder Vorversprödung bzw. -verdichtung oder bedingen einen hohen apparativen Aufwand, z.B. durch intensive Kühlung. Weiterhin ist bei allen Verfahren die chemische und/oder thermische Beanspruchung der Makromoleküle, besonders bei der Verarbeitung von hochviskosen, hochsubstituierten Produkten, immer noch so hoch, daß bei der Mahlung die Makromoleküle im Sinne einer Kettenverkleinerung abgebaut werden, was sich insbesondere durch den mehr oder minder hohen Viskositätsabbau gegenüber den eingesetzten Produkten bemerkbar macht. Außerdem verhornen die Oberflächen der behandelten Produkte durch die Vorversprödungs- bzw. Vortrocknungsschritte, was sich unerwünscht bezüglich der kundenseitig geforderten schnellen und vollständigen Löseeigenschaften bemerkbar macht.

Aufgabe der Erfindung ist es, das aus der EP-B 0 370 447 bekannte Verfahren so weiterzuentwickeln, daß durch optimale Einstellung der Mahl- und Trocknungsparameter ein größerer Bereich an Mahlgraden eingestellt werden kann, das Schüttgewicht des Mahlgutes weiter erhöht und der Anteil an Überkorn erheblich gesenkt werden kann, bei keinem oder nur sehr geringem Viskositätsabbau des zerkleinerten Mahlgutes gegenüber dem Ausgangsmahlgut. Weiterhin soll durch die Erfindung die einzubringende Energie gesenkt und insgesamt der Wirkungsgrad des Verfahrens erhöht werden.

Diese Aufgabe wird erfindungsgemäß in der Weise gelöst, daß
a) ein Gasstrom in drei Teilgasströme aufgeteilt wird,
b) ein erster Teilgasstrom, der das Mahlgut befördert, in den Mahl- und Reibungsraum einer Mühle zum Zerkleinern des Mahlgutes eingeleitet wird,
c) ein zweiter Teilgasstrom tangential in den Raum zwischen dem Mühlengehäuse und dem Reibungsraum eingeleitet wird,
d) ein dritter Teilgasstrom das von dem ersten und zweiten Teilgasstrom aus der Mühle herausgeleitete, zerkleinerte und getrocknete Mahlgut aufnimmt und weiterbefördert,
e) das Mahlgut von dem zu einem Gesamtgasstrom zusammengeführten drei Teilgasströmen getrennt und
f) der Gesamtgasstrom gefiltert und gegebenenfalls zurückgeführt und wiederverwendet wird.

In Ausgestaltung des Verfahrens macht der erste Teilgasstrom 20 bis 35 Vol.%, der zweite Teilgasstrom 15 bis 20 Vol.% und der dritte Teilgasstrom 50 bis 65 Vol.% des Gasstroms aus.

Das Verfahren wird so geleitet, daß die Anfangsfeuchte des Celluloseethers 20 bis 70 Gew.% und die End- oder Restfeuchte 1 bis 10 Gew.% betragen.

Das Verfahren ist so ausgestaltet, daß der erste Teilgasstrom das Mahlgut in den Mahlraum zur Schlagzerkleinerung einbringt, wobei das Mahlgut im Kreislauf geführt wird, daß gleichzeitig in Gegenlaufrichtung zu dem Kreislauf das schlagzerkleinerte Mahlgut im Reibungsraum reibzerkleinert wird und daß der zweite Teilgasstrom den Reibungsraum außen in Gegenlaufrichtung umströmt und einen Beitrag zur Temperierung und/oder Befeuchtung des Mahlgutes auf die gewünschte Restfeuchte liefert.

Die weitere Verfahrensweise ergibt sich aus den Merkmalen der Ansprüche 5 bis 10.

Die Vorrichtung zur Durchführung des Verfahrens zeichnet sich dadurch aus, daß eine mit einer Gasstromquelle verbundene Hauptgasleitung über ein Heiz- und Temperierregister mit einer Auslaßleitung einer Mühle verbunden ist und zu einem Abscheider führt, daß eine erste Gasleitung von der Hauptgasleitung abzweigt und mit einer Dosierleitung für das Mahlgut verbunden und an die Mühle eingangsseitig angeschlossen ist und daß von der ersten Gasleitung eine zweite Gasleitung abzweigt, die an die Mühle gleichfalls eingangsseitig angeschlossen ist.

In Ausgestaltung der Vorrichtung ist in der Hauptgasleitung zwischen der Abzweigung der ersten Gasleitung und dem Ausgang der Mühle eine Drosselklappe zum Regeln des Gasdrucks in der Hauptgasleitung angeordnet. Ebenso regelt eine Drosselklappe in der zweiten Gasleitung den Gasdruck.

In Weiterbildung der Vorrichtung ist in dem Abscheider das zerkleinerte Mahlgut von dem Gesamtgasstrom trennbar und ist eine Austrittsleitung für den Gesamtgasstrom aus dem Abscheider mit der Gasstromquelle verbunden und eine Rückleitung an einen Kondensator angeschlossen und ist der Gasstrom im Kreis geführt.

Die Mühle weist zweckmäßigerweise ein mit mehreren Schlagleisten ausgestattetes Schlägerrad und einen dazu konzentrisch angeordneten Siebkorb auf, der das Schlägerrad umschließt, besteht der Siebkorb aus abschnittsweise nebeneinander am Umfang angeordneten Sägezahnsegmenten und an Stützsieben befestigten Reibblechen, wobei die Stützsiebe mit Löchern ausgestattet sind, und beträgt der Abstand zwischen dem Siebkorb und der Innenwand eines Gehäuses der Mühle 12 bis 30 mm.

Die weitere Ausgestaltung der Vorrichtung ergibt sich aus den Merkmalen der Patentansprüche 16 bis 23.

Mit der Erfindung wird der Vorteil erzielt, daß mit einfachen Mitteln, mit denen eine Aufteilung des Gesamtgasstromes in drei Teilgasströme erfolgt, wobei die Strömungsgeschwindigkeiten und die Teilstrommengen regelbar sind, der Mahlgrad, die Trocknung und die Körnung des Mahlgutes sehr genau auf gewünschte Werte eingestellt werden können.

Im folgenden wird die Erfindung anhand der Zeichnungen näher erläutert. Es zeigen:
- Fig. 1: ein Blockdiagramm der Vorrichtung nach der Erfindung;
- Fig. 2: eine geschnittene Seitenansicht einer Mühle, die Bestandteil der Vorrichtung ist, nach Fig. 1;
- Fig. 3: eine schematische Schnittansicht der Mühle nach Figur 2;
- Fig. 4: eine Ansicht der Mühle und von Leitungsabschnitten für die Teilgasströme, und
- Fig. 5: im Schnitt in Seitenansicht einen Teilabschnitt eines Siebkorbes der Mühle.

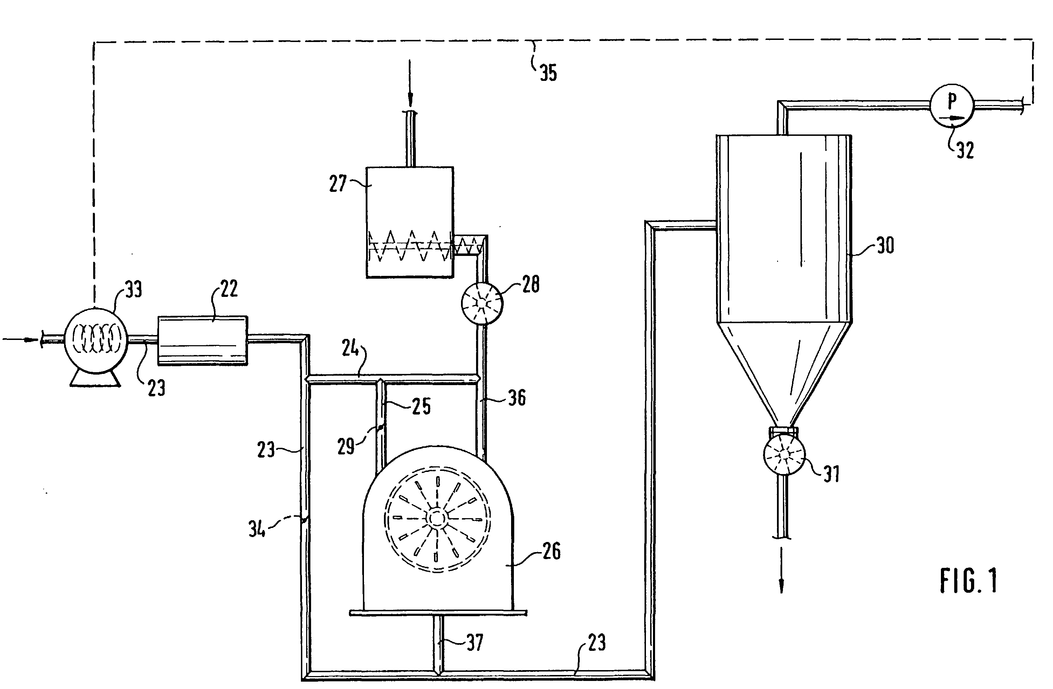

Wie Figur 1 zeigt, liefert eine saugseitig betriebene Gasstromquelle 32 über das Heizregister 22 einen Gasstrom, der nach dem Heizregister in drei Teilgasströme aufgeteilt wird. Hierzu zweigt eine erste Gasleitung 24 von der Hauptgasleitung 23 ab und ist mit einer Dosierleitung 36 für das Mahlgut verbunden. Von der ersten Gasleitung 24 zweigt des weiteren eine zweite Gasleitung 25 ab, die an eine Mühle 26 eingangsseitig angeschlossen ist. Das Mahlgut wird einem Dosierbunker 27 zugeführt und gelangt über einen drehzahlengeregelten Schneckenförderer in die Dosierleitung 36, in der sich eine Zellradschleuse 28 befindet. Wie schon zuvor erwähnt, ist die erste Gasleitung 24 für den ersten Teilgasstrom nach der Zellradschleuse 28 mit der Dosierleitung 36 verbunden, um das Mahlgut in die Mühle 26 einzutragen. Die zweite Gasleitung 25 für den zweiten Teilgasstrom ist tangential mit dem Mühlengehäuse 26 verbunden und enthält eine Drosselklappe 29 zum Regeln des Gasdruckes des zweiten Teilgasstroms, der kein Mahlgut befördert.

In der Hauptgasleitung 23, die den dritten Teilgasstrom weiterbefördert, ist zwischen der Abzweigung der ersten Gasleitung 24 und dem Ausgang der Mühle 26, der über eine Auslaßleitung 37 mit der Hauptgasleitung 23 verbunden ist, eine Drosselklappe 34 zum Regeln des Gasdrucks in der Hauptgasleitung 23 angeordnet. Das in der Mühle 26 zerkleinerte und getrocknete Mahlgut wird von den in der Mühle 26 zusammengeführten ersten und zweiten Teilgasströmen über die Auslaßleitung 37 in die Hauptgasleitung 23 eingetragen, in der die drei Teilgasströme wieder zusammengeführt werden und einen Gesamtgasstrom bilden, der das getrocknete und zerkleinerte Mahlgut in der Hauptgasleitung 23 zu einem Abscheider 30 weiterbefördert. In dem Abscheider 30 wird das zerkleinerte Mahlgut von dem Gesamtgasstrom abgetrennt und über eine Zellradschleuse 31 am Ausgang des Abscheiders 30 zur Weiterverwendung ausgetragen. Der Abscheider 30 weist des weiteren eine Austrittsleitung für den Gesamtgasstrom auf, die mit der Gasstromquelle 32 verbunden ist. Eine in Fig. 1 gestrichelt eingezeichnete Rückleitung 35 verbindet die Gasstromquelle 32 mit einem Kondensator 33, in dem die eingebrachte Feuchte aus dem gereinigten Gesamtgasstrom entfernt und der Gesamtgasstrom wieder in den Kreislauf zurückgeführt werden kann. Selbstverständlich ist es auch möglich, auf eine Rückführung zu verzichten, so daß dann die Rückleitung 35 und der Kondensator 33 entfallen könnten. In diesem Fall entweicht dann der gereinigte Gasstrom, der im allgemeinen ein Luftstrom ist, ins Freie.

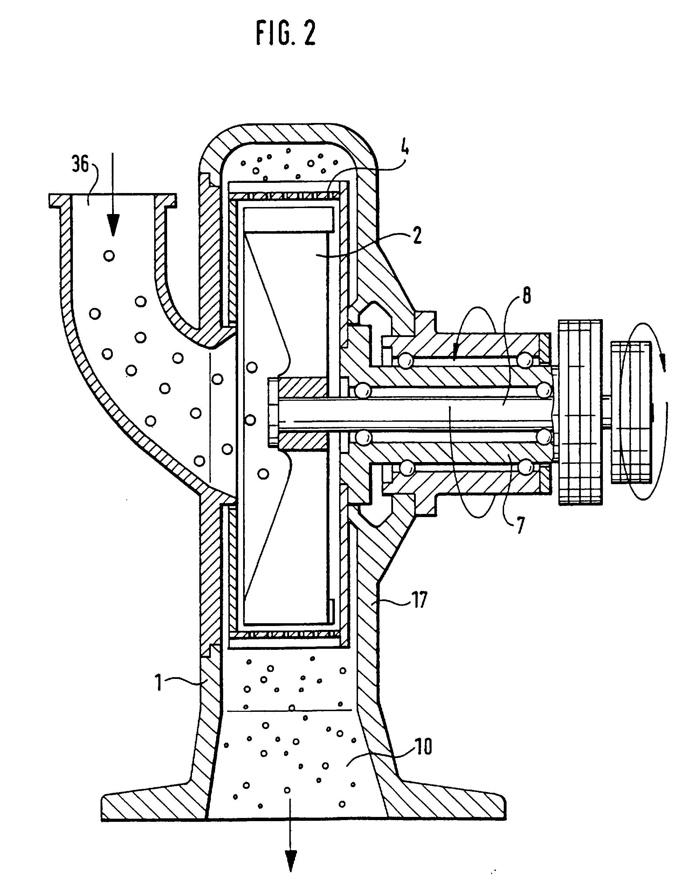

In der schematischen Seitenansicht der Mühle 26 in Fig. 2 ist die Dosierleitung 36 für das Mahlgut gezeigt, die etwa mittig an das Gehäuse 1 auf der Höhe von Antriebswellen 7 und 8 für einen Siebkorb 4 bzw. ein Schlägerrad 2 angeschlossen ist. In dieser schematischen Zeichnung ist das in die Mühle 26 eingetragene Mahlgut durch schwarze Kreise in der Dosierleitung 36 angedeutet, und wird in das Innere des Siebkorbes 4 eingebracht. Das zerkleinerte Mahlgut, das aus dem Siebkorb 4 ausgetreten ist, ist durch schwarze Kreise mit kleinerem Durchmesser als das eingetragene Mahlgut dargestellt. Das zerkleinerte Mahlgut wird durch eine am Boden der Mühle 26 befindliche Auslaßöffnung 10 ausgetragen. In der Mühle 26 befinden sich Einrichtungen 17 zum Temperieren der Mühle und des Siebkorbes 4. Durch Pfeile wird die Drehrichtung des Schlägerrades und Siebkorbes angezeigt.

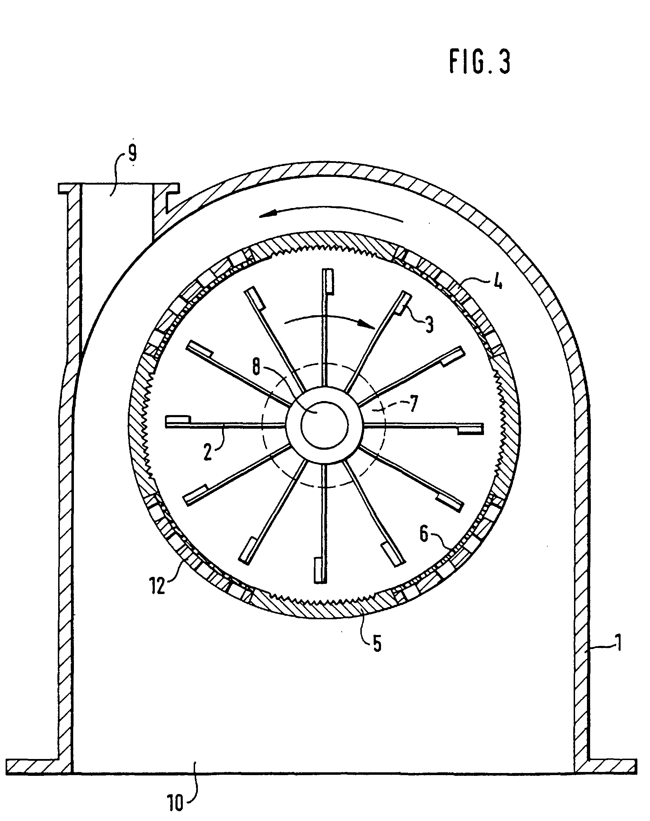

Figur 3 zeigt in schematischer Darstellung in Seitenansicht im Schnitt die Mühle 26 zur Schlag-Reibzerkleinerung des Mahlgutes. In dem Gehäuse 1 ist ein durch die Antriebswelle 8 umlaufendes Schlägerrad angeordnet, das radiale Schlagarme aufweist, an deren Ende Schlagleisten 3 angeordnet sind. Konzentrisch zum Schlägerrad 2 ist der Siebkorb 4 angeordnet, der auf der Antriebswelle 7 befestigt ist, die gegenläufig zum Schlägerrad den Siebkorb antreibt. Die beiden Antriebswellen 7 und 8 werden beispielsweise von einem nicht gezeigten Motor über Zahnriemen angetrieben. Der Siebkorb setzt sich abschnittsweise aus Sägezahnsegmenten 5 und mit Öffnungen versehenen Reibblechen 6 zusammen. Wie schon anhand der Figur 2 erläutert wurde, werden das Mahlgut und der erste Teilgasstrom mittig in den Siebkorb 4 über die Dosierleitung 36 eingetragen, während über die Einlaßöffnung 9 der zweite Teilgasstrom tangential in den Raum zwischen der Innenwand des Gehäuses 1 und dem Siebkorb 4 einströmt. Der zweite Teilgasstrom transportiert bis zur Mühle kein Mahlgut.

Das durch den ersten Teilgasstrom in den Siebkorb 4 eingebrachte Mahlgut wird im Kreislauf geführt und durch die Schlagleisten 3 des Schlägerrades 2 zerkleinert. In Gegenlaufrichtung zu dem Kreislauf wird das schlagzerkleinerte Mahlgut durch die Sägezähne der Sägezahnsegmente 5 und durch die Reibbleche 6 weiter zerkleinert. Der zweite Teilgasstrom umströmt in Gegenlaufrichtung zu der Drehbewegung des Schlägerrades 2 den Siebkorb 4 und liefert einen Beitrag zur Temperierung und/oder Befeuchtung des Mahlgutes auf die gewünschte Restfeuchte, die 1 bis 10 Gew.% beträgt und reinigt das Gehäuse von anhaftenden Produktpartikeln. Die Anfangsfeuchte des Zelluloseethers, wenn er in die Mühle 26 eingetragen wird, liegt im Bereich von 20 bis 70 Gew.%.

Die drei Teilgasströme des Gesamtgasstromes sind so aufgeteilt, daß der erste Teilgasstrom 20 bis 35 Vol.%, der zweite Teilgasstrom 15 bis 20 Vol.% und der dritte Teilgasstrom 50 bis 65 Vol.% ausmachen. Der Gasstrom wird vor der Aufteilung in die drei Teilgasströme durch das Heiz- oder Temperierregister 22 von einer Temperatur von 14 bis 25 °C auf 60 bis 200 °C erwärmt bzw. temperiert und, wie schon zuvor erwähnt wurde, wird der Gasdruck des zweiten und dritten Teilgasstroms mittels der Drosselklappen 29 bzw. 34 geregelt. Der Feuchtigkeitsgehalt des Mahlgutes kann zusätzlich zu der Temperierung der drei Teilgasströme mittels der Einrichtungen 17 in der Mühle 26 (vgl. Fig. 2) geregelt werden, um die angestrebte End- bzw. Restfeuchtigkeit des zerkleinerten Mahlgutes einzustellen. Hierzu sind die Einrichtungen 17 innerhalb des Siebkorbes 4 und Gehäuses 1 angeordnet, jedoch ist auch eine Lösung denkbar, bei der Teile des Siebkorbes 4, beispielsweise die Sägezahnsegmente 5 oder die Reibbleche 6 direkt beheizt bzw. temperiert werden. Ebenso ist es denkbar, Teile des Schlägerrades 2, wie beispielsweise die Schlagleisten 3, zu temperieren bzw. zu beheizen.

Die Vorrichtung wird bevorzugt zum Mahlen von Celluloseethern aus der Gruppe Methyl-, Hydroxyethyl-, Hydroxypropyl- und Carboxymethylcellulosen und deren Mischungen eingesetzt, jedoch können ebenso andere Stoffe gemahlen und gleichzeitig getrocknet werden. Die Celluloseether, die gemahlen und getrocknet werden, besitzen im allgemeinen eine Viskosität von 5.000 bis 500.000 mPas, gemessen in einer 1,9 %igen wäßrigen Lösung (gemessen nach Höpplen).

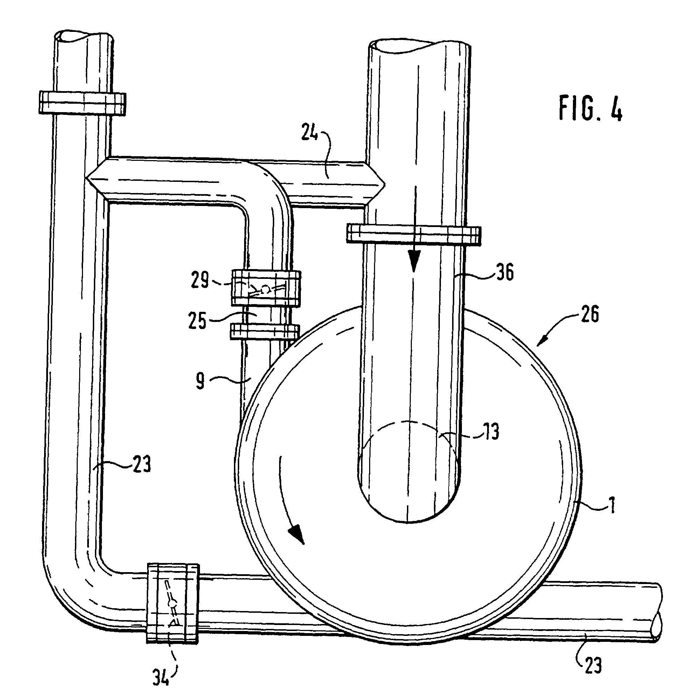

Fig. 4 zeigt in Seitenansicht, daß die Dosierleitung 36 mit einer Seiteneinlaßöffnung 13 am Gehäuse der Mühle 26 verbunden ist, wobei die Einlaßöffnung 13 sich auf der Höhe der in Figur 3 gezeigten Antriebswellen 7, 8 befindet, d.h. koaxial zu diesen Antriebswellen liegt.

Die zweite Gasleitung 25 ist mit einer oberen Einlaßöffnung bzw. einem Einlaßstutzen 9 am Gehäuse 1 verbunden, und durch diese zweite Gasleitung 25 strömt der zweite Teilgasstrom in den Raum zwischen der Innenseite des Gehäuses 1 und dem Siebkorb 4 ein. Über eine im Boden des Gehäuses 1 angebrachte Auslaßöffnung 10 (vgl. Figuren 2 und 3) und die Auslaßleitung 37 (vgl. Fig. 1) strömen der erste Teilgasstrom mit dem zerkleinerten und zerriebenen Mahlgut und der zweite Teilgasstrom in die Hauptgasleitung 23 ein, in der sie zu dem Abscheider 30 transportiert werden.

Das Schlägerrad 2 läuft mit einer Umfangsgeschwindigkeit von 50 bis 93 m/s und der dazu gegenläufige Siebkorb 4 mit einer Umfangsgeschwindigkeit von 20 bis 52 m/s um.

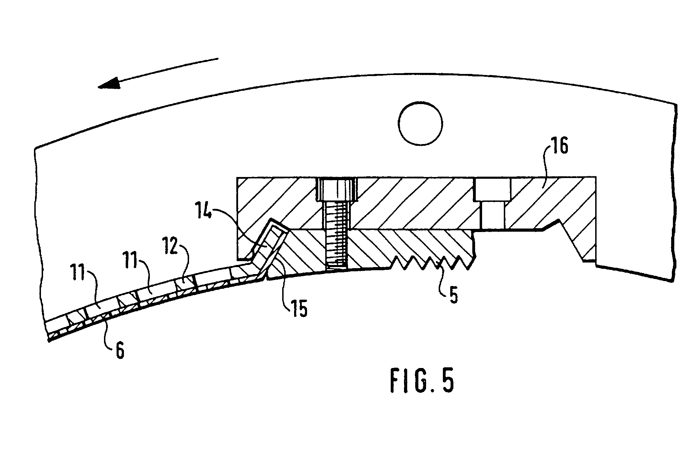

Figur 5 zeigt einen Abschnitt dieses Siebkorbes 4 im vergrößerten Maßstab. Der Siebkorb 4 setzt sich aus den am Umfang angeordneten Sägezahnsegmenten 5 und den an Stützsieben 12 befestigten Reibblechen 6 zusammen, wobei die Sägezähne der Sägezahnsegmente 5 in das Innere des Siebkorbes weisen, ebenso die Reibbleche 6. Die Stützsiebe 12 sind mit Löchern 11 ausgestattet. Die Reibbleche 6 haben eine Dicke von 0,75 bis 2,0 mm und Öffnungen mit einer Länge von 0,12 bis 0,8 mm und der gleichen Breite wie die Länge. Bei einer anderen Ausführungsform der Reibbleche 6 beträgt die Breite 0,15 bis 0,5 mm, während die Länge 0,12 bis 2 mm ist. Die Stützsiebe 12 haben nach außen abgewinkelte Enden 14, die an Schrägflächen 15 der Sägezahnsegmente 5 anliegen. Klemmteile 16 umfassen die Enden 14 und die Sägezahnsegmente 5 und sind mit den letzteren verschraubt. Die Länge der Sägezähne beträgt 1 bis 10 mm.

Die Dicke der Stützsiebe 12 liegt im Bereich von 4 bis 8 mm, und die Löcher 11 haben einen Durchmesser von 15 bis 20 mm. Die Stege zwischen den Löchern besitzen eine kleinste Breite von 4 bis 5 mm.

Das erfindungsgemäße Verfahren und die Vorrichtung ermöglichen eine schnellere Trocknung des Mahlgutes und somit einen erhöhten Durchsatz an Mahlgut durch die Vorrichtung, ohne daß ein Viskositätsabbau erfolgt, im Vergleich zu dem Verfahren und der Vorrichtung nach der EP-B 0 370 447.

## Patentansprüche

1. Verfahren zum gleichzeitigen Mahlen und Trocknen eines feuchten Celluloseether enthaltenden Mahlgutes, bei dem
a) ein Gasstrom in drei Teilgasströme aufgeteilt wird,
b) ein erster Teilgasstrom, der das Mahlgut befördert, in den Mahl- und Reibungsraum einer Mühle zum Zerkleinern des Mahlgutes eingeleitet wird,
c) ein zweiter Teilgasstrom tangential in den Raum zwischen dem Mühlengehäuse und dem Reibungsraum eingeleitet wird,
d) ein dritter Teilgasstrom das von dem ersten und zweiten Teilgasstrom aus der Mühle herausgeleitete, zerkleinerte und getrocknete Mahlgut aufnimmt und weiterbefördert,
e) das Mahlgut von dem zu einem Gesamtgasstrom zusammengeführten drei Teilgasströmen getrennt und
f) der Gesamtgasstrom gefiltert und gegebenenfalls zurückgeführt und wiederverwendet wird.

2. Verfahren nach Anspruch 1, **dadurch gekennzeichnet, daß** der erste Teilgasstrom 20 bis 35 Vol.%, der zweite Teilgasstrom 15 bis 20 Vol.% und der dritte Teilgasstrom 50 bis 65 Vol.% des Gasstromes ausmachen.

3. Verfahren nach Anspruch 1, **dadurch gekennzeichnet, daß** die Anfangsfeuchte des Celluloseethers 20 bis 70 Gew.% und die End- oder Restfeuchte 1 bis 10 Gew.% betragen.

4. Verfahren nach Anspruch 1, **dadurch gekennzeichnet, daß** der erste Teilgasstrom das Mahlgut in den Mahlraum zur Schlagzerkleinerung einbringt, wobei das Mahlgut im Kreislauf geführt wird, daß gleichzeitig in Gegenlaufrichtung zu dem Kreislauf das schlagzerkleinerte Mahlgut im Reibungsraum reibzerkleinert wird und daß der zweite Teilgasstrom den Reibungsraum außen in Gegenlaufrichtung umströmt und einen Beitrag zur Temperierung und/oder Befeuchtung des Mahlgutes auf die gewünschte Restfeuchte liefert und das Gehäuse von anhaftenden Produktpartikeln reinigt.

5. Verfahren nach Anspruch 1, **dadurch gekennzeichnet, daß** der Gasstrom vor der Aufteilung in drei Teilgasströme von einer Temperatur von 14 bis 25 °C auf 60 bis 200 °C erwärmt bzw. temperiert wird und daß der Druck des zweiten und dritten Teilgasstromes geregelt wird.

6. Verfahren nach Anspruch 4, **dadurch gekennzeichnet, daß** die Umlaufgeschwindigkeit im Mahlraum 50 bis 93 m/s und die gegenläufige Umlaufgeschwindigkeit im Reibungsraum 20 bis 52 m/s betragen.

7. Verfahren nach Anspruch 5, **dadurch gekennzeichnet, daß** der Feuchtigkeitsgehalt zusätzlich zu der Temperierung der drei Teilgasströme geregelt wird, um die angestrebte Restfeuchtigkeit des zerkleinerten Mahlgutes einzustellen.

8. Verfahren nach Anspruch 1, **dadurch gekennzeichnet, daß** der Mahl- und der Reibungsraum oder Teile davon beheiz- bzw. temperierbar sind.

9. Verfahren nach Anspruch 1, **dadurch gekennzeichnet, daß** Celluloseether mit einer Viskosität von 5.000 bis über 500.000 mPas, gemessen in einer 1,9 %igen wäßrigen Lösung, gemahlen und getrocknet wird.

10. Verfahren nach Anspruch 9, **dadurch gekennzeichnet, daß** der Celluloseether aus der Gruppe Methly-, Hydroxyethyl-, Hydroxypropyl- und Carboxymethylcellulosen und deren Mischungen ausgewählt wird.

11. Vorrichtung zur Durchführung des Verfahrens nach einem der Ansprüche 1 bis 10, **dadurch gekennzeichnet, daß** eine mit einer Gasstromquelle (32) verbundene Hauptgasleitung (23) über ein Heiz- oder Temperierregister (22) mit einer Auslaßleitung (37) einer Mühle (26) verbunden ist und zu einem Abschneider (30) führt, daß eine erste Gasleitung (24) von der Hauptgasleitung abzweigt und mit einer Dosierleitung (36) für das Mahlgut verbunden und an die Mühle (26) eingangsseitig angeschlossen ist und daß von der ersten Gasleitung (24) eine zweite Gasleitung (25) abzweigt, die an die Mühle (26) gleichfalls eingangsseitig angeschlossen ist.

12. Vorrichtung nach Anspruch 11, **dadurch gekennzeichnet, daß** in der Hauptgasleitung (23) zwischen der Abzweigung der ersten Gasleitung (24) und dem Ausgang der Mühle (26) eine Drosselklappe (34) zum Regeln des Gasdrucks in der Hauptgasleitung (23) angeordnet ist.

13. Vorrichtung nach Anspruch 11, **dadurch gekennzeichnet, daß** eine Drosselklappe (29) in der zweiten Gasleitung (25) den Gasdruck regelt.

14. Vorrichtung nach Anspruch 11, **dadurch gekennzeichnet, daß** in dem Abscheider (30) das zerkleinerte Mahlgut von dem Gesamtgasstrom trennbar ist, daß eine Austrittsleitung für den Gesamtgasstrom aus dem Abscheider (30) mit der Gasstromquelle (32) verbunden und eine Rückleitung (35) an einen Kondensator (33) angeschlossen ist, und daß der Gasstrom im Kreis geführt ist.

15. Vorrichtung nach Anspruch 11, **dadurch gekennzeichnet, daß** die Mühle (26) ein mit mehreren Schlagleisten (3) ausgestattetes Schlägerrad (2) und einen dazu konzentrisch angeordneten Siebkorb (4) aufweist, der das Schlägerrad (2) umschließt, daß der Siebkorb (4) aus abschnittsweise nebeneinander am Umfang angeordneten Sägezahnsegmenten (5) und an Stützsieben (12) befestigten Reibblechen (6) besteht, wobei die Stützsiebe (12) mit Löchern (11) ausgestattet sind und daß der Abstand zwischen dem Siebkorb (4) und der Innenwand eines Gehäuses (1) der Mühle (26) 12 bis 30 mm beträgt.

16. Vorrichtung nach Anspruch 15, **dadurch gekennzeichnet, daß** die Dosierleitung (36) mit einer in dem Gehäuse (1) koaxial zu Antriebswellen (7, 8) für den Siebkorb (4) und das Schlägerrad (2) angeordneten Seiteneinlaßöffnung (13) verbunden ist, zum Einleiten des ersten Teilgasstroms, der das Mahlgut transportiert, in den Siebkorb (4).

17. Vorrichtung nach Anspruch 15, **dadurch gekennzeichnet, daß** die zweite Gasleitung (25) mit einer oberen Einlaßöffnung (9) im Gehäuse (1) verbunden ist, zum Einleiten des zweiten Teilgasstroms in den Raum zwischen der Innenseite des Gehäuses (1) und dem Siebkorb (4).

18. Vorrichtung nach Anspruch 15, **dadurch gekennzeichnet, daß** über eine im Boden des Gehäuses (1) angebrachte Auslaßöffnung (10) und die Auslaßleitung (37) der erste Teilgasstrom mit dem zerkleinerten Mahlgut und der zweite Teilgasstrom in die Hauptgasleitung (23) strömen.

19. Vorrichtung nach Anspruch 15, **dadurch gekennzeichnet, daß** das Schlägerrad (2) mit einer Umfangsgeschwindigkeit von 50 bis 93 m/s und der Siebkorb (4) mit einer Umfangsgeschwindigkeit von 20 bis 52 m/s umlaufen.

20. Vorrichtung nach Anspruch 15, **dadurch gekennzeichnet, daß** die Stützsiebe (12) schräg nach außen abgewinkelte Enden (14) aufweisen, die an Schrägflächen (15) der Sägezahnsegmente (5) anliegen und daß Klemmteile (16) die Sägezahnsegmente (5) einschließlich der anliegenden Enden (14) der Stützsiebe (12) umfassen und mit den Sägezahnsegmenten (5) verschraubt sind, deren Sägezähne eine Länge von 1 bis 10 mm aufweisen.

21. Vorrichtung nach Anspruch 15, **dadurch gekennzeichnet, daß** die Reibbleche (6) eine Dicke von 0,75 bis 2,0 mm und Öffnungen mit einer Länge von 0,12 bis 2,0 mm und der gleichen Breite oder mit einer Breite von 0,15 bis 0,5 mm aufweisen.

22. Vorrichtung nach Anspruch 15, **dadurch gekennzeichnet, daß** die Stützsiebe (12) eine Dicke von 4 bis 8 mm, die Löcher (11) einen Durchmesser von 15 bis 20 mm und die Stege zwischen den Löchern eine kleinste Breite von 4 bis 5 mm besitzen.

23. Vorrichtung nach Anspruch 15, **dadurch gekennzeichnet, daß** in der Mühle (26) Einrichtungen (17) zum Temperieren des Gehäuses (1), des Schlägerrades (2) und/oder des Siebkorbes (4) vorhanden sind.

## Claims

1. A process for simultaneously grinding and drying a material to be ground containing moist cellulose ether, in which
a) a gas stream is divided into three partial gas streams,
b) a first partial gas stream, which transports the material to be ground, is introduced into the grinding and friction space of a mill for reducing the material to be ground,
c) a second partial gas stream is introduced tangentially into the space between the mill housing and the friction space,
d) a third partial gas stream takes up and transports further the reduced and dried ground material brought out of the mill by the first and second partial gas streams,
e) the ground material is separated from the three partial gas streams brought together to form a complete gas stream and
f) the complete gas stream is filtered and, if appropriate, returned and reused.

2. The process as claimed in claim 1, wherein the first partial gas stream makes up 20 to 35% by volume, the second partial gas stream makes up 15 to 20% by volume and the third partial gas stream makes up 50 to 65% by volume of the gas stream.

3. The process as claimed in claim 1, wherein the initial moisture of the cellulose ether is 20 to 70% by weight and the final or residual moisture is 1 to 10% by weight.

4. The process as claimed in claim 1, wherein the first partial gas stream introduces the material to be ground into the grinding space for impact reduction, the material to be ground being circulated, wherein the impact-ground material is simultaneously friction-ground in the friction space in the counterrunning direction with respect to the circulation and wherein the second partial gas stream flows around the outside of the friction space in the counterrunning direction and contributes to the temperature-controlling and/or moistening of the ground material to the desired residual moisture and cleans the housing of adhering product particles.

5. The process as claimed in claim 1, wherein before being divided into the three partial gas streams, the gas stream is heated, or temperature-controlled, from a temperature of 14 to 25°C to 60 to 200°C and wherein the pressure of the second and third partial gas streams is regulated.

6. The process as claimed in claim 4, wherein the rotational speed in the grinding space is 50 to 93 m/s and the counterrunning rotational speed in the friction space is 20 to 52 m/s.

7. The process as claimed in claim 5, wherein the moisture content is regulated in addition to the temperature controlling of the three partial gas streams, in order to set the desired residual moisture of the reduced ground material.

8. The process as claimed in claim 1, wherein the grinding space and the friction space or parts thereof can be heated or their temperature controlled.

9. The process as claimed in claim 1, wherein, cellulose ether having a viscosity of 5000 to over 500,000 mPas, measured in a 1.9% strength aqueous solution, is ground and dried.

10. The process as claimed in claim 9, wherein the cellulose ether is selected from the group of methyl, hydroxyethyl, hydroxypropyl and carboxymethyl celluloses and their mixtures.

11. An apparatus for carrying out the process as claimed in one of claims 1 to 10, wherein a main gas line (23), connected to a gas-stream source (32), is connected via a heating and temperature-controlling register (22) to an outlet line (37) of a mill (26) and to a separator (30), wherein a first gas line (24) branches off from the main gas line and is connected to a metering line (36) for the material to be ground and is connected to the mill (26) on the input side and wherein a second gas line (25), which is likewise connected to the mill (26) on the input side, branches off from the first gas line (24).

12. The apparatus as claimed in claim 11, wherein a reducing damper (34) for regulating the gas pressure in the main gas line (23) is arranged in the main gas line (23) between the branch of the first gas line (24) and the output of the mill (26).

13. The apparatus as claimed in claim 11, wherein a reducing damper (29) in the second gas line (25) regulates the gas pressure.

14. The apparatus as claimed in claim 11, wherein in the separator (30) the reduced ground material can be separated from the complete gas stream, wherein an outlet line for the complete gas stream out of the separator (30) is connected to the gas-stream source (32) and a return line (35) is connected to a condenser (33), and wherein the gas stream is circulated.

15. The apparatus as claimed in claim 11, wherein the mill (26) has a beater wheel (2), equipped with a plurality of beater bars (3), and a screening cage (4) which is arranged concentrically with respect to said beater wheel (2) and surrounds it, wherein the screening cage (4) comprises sawtooth segments (5) arranged sectionally next to one another at the circumference and friction plates (6) fastened to supporting screens (12), the supporting screens (12) being provided with holes (11), and wherein the distance between the screening cage (4) and the inside wall of a housing (1) of the mill (26) is 12 to 30 mm.

16. The apparatus as claimed in claim 15, wherein the metering line (36) is connected to a side inlet opening (13), arranged in the housing (1) coaxially with respect to drive shafts (7, 8) for the screening cage (4) and the beater wheel (2), for introducing the first partial gas stream, which transports the material to be ground, into the screening cage (4).

17. The apparatus as claimed in claim 15, wherein the second gas line (25) is connected to an upper inlet opening (9) in the housing (1), for introducing the second partial gas stream into the space between the inner side of the housing (1) and the screening cage (4).

18. The apparatus as claimed in claim 15, wherein the first partial gas stream, with the reduced ground material, and the second partial gas stream flow into the main gas line (23) via an outlet opening (10), provided in the bottom of the housing (1), and the outlet line (37).

19. The apparatus as claimed in claim 15, wherein the beater wheel (2) rotates at a circumferential speed of 50 to 93 m/s and the screening cage (4) rotates at a circumferential speed of 20 to 52 m/s.

20. The apparatus as claimed in claim 15, wherein the supporting screens (12) have obliquely outwardly angled-off ends (14), which bear against beveled faces (15) of the sawtooth segments (5) and wherein clamping parts (16) enclose the sawtooth segments (5), including the ends (14) of the supporting screens (12) bearing against them, and are bolted to the sawtooth segments (5), the sawteeth of which have a length of 1 to 10 mm.

21. The apparatus as claimed in claim 15, wherein the friction plates (6) have a thickness of 0.75 to 2.0 mm and openings with a length of 0.12 to 2.0 mm and the same width or with a width of 0.15 to 0.5 mm.

22. The apparatus as claimed in claim 15, wherein the supporting screens (12) have a thickness of 4 to 8 mm, the holes (11) have a diameter of 15 to 20 mm and the lands between the holes have a minimum width of 4 to 5 mm.

23. The apparatus as claimed in claim 15, wherein there are in the mill (26) devices (17) for controlling the temperature of the housing (1), of the beater wheel (2) and/or of the screening cage (4).

## Revendications

1. Procédé pour le broyage et le séchage simultanés d'une matière de broyage contenant un éther cellulosique humide, dans lequel
a) on divise un flux de gaz en trois flux partiels,
b) on conduit un premier flux de gaz partiel, qui transporte la matière de broyage, dans la chambre de broyage et la chambre d'attrition d'un broyeur, en vue de fragmenter la matière de broyage,
c) on conduit un deuxième flux de gaz tangentiellement dans l'espace entre le carter du broyeur et la chambre d'attrition,
d) un troisième flux de gaz capte la matière de broyage fragmentée et séchée, évacuée du broyeur par le premier et le deuxième flux de gaz, et transporte celle-ci ensuite,
e) on sépare la matière broyée du flux de gaz total issu de la réunion des trois flux de gaz partiels, et
f) on filtre le flux de gaz total et éventuellement on le recycle et on le réutilise.

2. Procédé selon la revendication 1, **caractérisé en ce que** le premier flux de gaz partiel représente de 20 à 35 % volumiques, le second flux de gaz partiel de 15 à 20 % volumique et le troisième flux de gaz partiel de 50 à 65 % du flux de gaz total.

3. Procédé selon la revendication 1, **caractérisé en ce que** l'humidité initiale de l'éther cellulosique est de 20 à 70 % en poids et l'humidité finale ou résiduelle est de 1 à 10 % en poids.

4. Procédé selon la revendication 1, **caractérisé en ce que** le premier flux de gaz partiel apporte la matière de broyage dans la chambre de broyage pour la fragmenter par percussion, la matière de broyage étant conduite en boucle, **en ce que**, en même temps, dans le sens inverse à la boucle, la matière de broyage fragmentée par percussion est fragmentée par attrition et **en ce que** le deuxième flux de gaz partiel s'écoule dans le sens inverse autour de la chambre d'attrition à l'extérieur et contribue à l'équilibrage de la température et/ou l'humidification de la matière de broyage pour obtenir l'humidité résiduelle souhaitée et nettoie le carter des particules de produits adhérentes.

5. Procédé selon la revendication 1, **caractérisée en ce qu'**on augmente la température du flux de gaz par chauffage, avant la division en trois flux de gaz partiels, d'une température de 14 à 25°C à une température de 60 à 200°C ou on équilibre sa température, et **en ce qu'**on contrôle la pression du deuxième et du troisième flux de gaz partiel.

6. Procédé selon la revendication 4, **caractérisé en ce que** la vitesse périphérique dans la chambre de broyage est de 50 à 93 m/s et la vitesse périphérique à contre-courant dans la chambre d'attrition est de 20 à 52 m/s.

7. Procédé selon la revendication 5, **caractérisé en ce que**, en plus de l'équilibrage de la température, on règle la teneur en humidité des trois flux de gaz partiels afin d'établir l'humidité résiduelle recherchée de la matière de broyage fragmentée.

8. Procédé selon la revendication 1, **caractérisé en ce qu'**on peut chauffer la chambre de broyage et la chambre d'attrition ou des pièces de ces chambres, ou on peut équilibrer la température.

9. Procédé selon la revendication 1, **caractérisé en ce qu'**on broie et on sèche l'éther cellulosique ayant une viscosité de 5000 à plus de 500000 mPas, mesurée sur une solution aqueuse à 1,9 %.

10. Procédé selon la revendication 9, **caractérisé en ce que** l'éther cellulosique est pris dans le groupe comprenant la méthyl-, l'hydroxyéthyl-, l'hydroxypropyl- et la carboxyméthylcellulose et leurs mélanges.

11. Dispositif pour la mise en oeuvre du procédé selon l'une des revendications 1 à 10, **caractérisé en ce que**, une conduite de gaz principale (23) raccordée à une source de flux de gaz (32) est reliée au moyen d'un registre de chauffage ou d'équilibrage de température (22) à un broyeur (26) muni d'une conduite d'évacuation (37) et conduit à un séparateur (30), **en ce qu'**une première conduite de gaz (24) est embranchée de la conduite de gaz principale et raccordée au côté d'arrivée à une conduite de dosage (36) pour la matière de broyage et au broyeur (26) et **en ce que** de la première conduite de gaz (24) s'embranche une seconde conduite de gaz (25), qui est également raccordée au côté d'arrivée au broyeur (26).

12. Dispositif selon la revendication 11, **caractérisé en ce que**, dans la conduite de gaz principale (23), entre l'embranchement de la première conduite de gaz (24) et la sortie du broyeur (26), est disposée une vanne à papillon (34) pour le réglage de la pression de gaz dans la conduite principale (23).

13. Dispositif selon la revendication 11, **caractérisé en ce que** dans la deuxième conduite de gaz (25) la pression de gaz est réglée par une vanne à papillon (29).

14. Dispositif selon la revendication 11, **caractérisé en ce que** la matière de broyage fragmentée est séparable du flux de gaz total dans le séparateur (30), **en ce qu'**une conduite d'évacuation pour le flux de gaz total du séparateur (30) est reliée à la source de gaz (32) et une conduite de retour (35) est raccordée à un condensateur (33), et **en ce que** le flux de gaz est conduit en boucle.

15. Dispositif selon la revendication 11, **caractérisé en ce que** le broyeur (26) présente une roue à percussion (2) munie de plusieurs barres de choc (3) et un panier de crible (4) disposé concentriquement par rapport à celle-ci, qui entoure la roué à percussion (2), **en ce que** le panier de crible (4) est constitué par des segments de dents de scie (5) disposés par lots côte à côte sur la périphérie, et par des plaques d'attrition (6) fixées sur des cribles de support (12), les cribles de support (12) étant muni de perforations (11) et **en ce que** la distance entre le panier de crible (4) et la paroi interne d'un carter (1) du broyeur (26) est de 12 à 30 mm.

16. Dispositif selon la revendication 15, **caractérisé en ce que** la conduite de dosage (36) est raccordée à un orifice d'admission latéral (13) disposé coaxialement dans le carter (1) par rapport aux arbres de commande (7, 8) du panier de crible (4) et de la roue à percussion (2), pour l'admission du premier flux de gaz partiel, qui apporte la matière de broyage, au panier de crible (4).

17. Dispositif selon la revendication 15, **caractérisé en ce que** la deuxième conduite de gaz (25) est reliée à un orifice d'admission supérieur (9) dans le carter (1) pour l'admission du deuxième flux de gaz partiel dans l'espace entre la paroi interne du carter (1) et le panier de crible (4).

18. Dispositif selon la revendication 15, **caractérisé en ce que** le premier flux de gaz partiel avec la matière de broyage fragmentée et le deuxième flux de gaz partiel s'écoulent par un orifice d'évacuation (10) disposé dans le fond du carter (1) et par la conduite d'évacuation (37) dans la conduite de gaz principale (23).

19. Dispositif selon la revendication 15, **caractérisé en ce que** la roue à percussion (2) tourne à une vitesse périphérique de 50 à 93 m/s et le panier de crible (4) à une vitesse périphérique de 20 à 52 m/s.

20. Dispositif selon la revendication 15, **caractérisé en ce que** les cribles de support (12) présentent des extrémités inclinées coudées vers l'extérieur (14), qui sont en appui sur les surfaces inclinées (15) des segments de dents de scie (5) et **en ce que** des éléments de serrage (16) entourent les segments de dents de scie (5) y compris les extrémités en appui (14) des cribles de support (12) et sont vissés aux segments de dents de scie (5), dont les dents de scie présentent une longueur de 1 à 10 mm.

21. Dispositif selon la revendication 15, **caractérisé en ce que** les plaques d'attrition (6) présentent une épaisseur de 0,75 à 2,0 mm et des perforations de 0,12 à 2,0 mm de long et de la même largeur ou de 0,15 à 0,5 mm de large.

22. Dispositif selon la revendication 15, **caractérisé en ce que** les cribles de support (12) présentent une épaisseur de 4 à 8 mm, les perforations (11) un diamètre de 15 à 20 mm et les entretoises entre les perforations présentent une largeur minimale de 4 à 5 mm.

23. Dispositif selon la revendication 15, **caractérisé en ce que** les dispositifs (17) pour l'équilibrage de la température du carter (1), de la roue à percussion (2) et/ou du panier de crible (4), sont présents dans le broyeur (26).
